Europäisches Patentamt

**European Patent Office**

Office européen des brevets

(19)

(11) Publication number: **0 001 935**
**B1**

(12)

# EUROPEAN PATENT SPECIFICATION

(45) Date of publication of patent specification: **15.09.82**

(51) Int. Cl.³: **F 16 B 31/02, F 16 B 39/28**

(21) Application number: **78300606.7**

(22) Date of filing: **08.11.78**

(54) Threaded fasteners, threaded fastener elements and fastening processes using same.

(30) Priority: **09.11.77 US 849756**

(43) Date of publication of application:
**16.05.79 Bulletin 79/10**

(45) Publication of the grant of the patent:
**15.09.82 Bulletin 82/37**

(84) Designated Contracting States:
**BE DE FR GB NL**

(56) References cited:
**FR - A - 2 301 723**
**US - A - 3 805 863**

(73) Proprietor: VSI CORPORATION
**600 North Rosemead Boulevard**
**Pasadena California 91107 (US)**

(72) Inventor: **Stencel, Edgar Louis**
**6561 Shenlyn Drive**
**Huntington Beach California 92647 (US)**

(74) Representative: **Slight, Geoffrey Charles et al,**
**Graham Watt & Co. Riverhead**
**Sevenoaks Kent TN13 2BN (GB)**

Courier Press, Leamington Spa, England.

Threaded fasteners, threaded fastener elements and fastening processes using same

The present invention relates to threaded fasteners, threaded fastener elements and fastening processes using same.

The venerable threaded fasteners consist of a nut and a bolt. The nut has internal threads that thread onto external threads of the bolt. Wrenching surfaces of the nut and bolt are conventionally provided to accept wrenches that tighten the nut and bolt to join the fastener and a workpiece together. Broadly, however, a bolt is to be regarded as comprising, essentially, an externally threaded pin, and a nut is to be regarded, essentially, as an internally threaded collar.

Many environments in which threaded fasteners are used require that the fasteners have extremely high integrity and strength. The fasteners must bear loads not only along their longitudinal axis but radially of the axis. More particularly, when the fasteners are used to join together two or more sheet-form parts which are loaded in the planes of the sheets with different loads, the fasteners are loaded in shear. Axial loads on the fasteners arise by the clamping of fastened parts between a head of the pin on one side and the collar on the other side.

Threaded fasteners quite often must respond well in environments where they are cyclically stressed under conditions that could give rise to fatigue failure. A threaded fastener with adequate clamp-up load on it tends to resist fatigue failure.

An obviously desirable feature of a threaded fastener is that it does not come apart in service. Various devices have been used to keep an internally threaded collar and an externally threaded pin together. One way of locking the collar and pin is to deform the threads of the collar so that they bear in radial compression against the threads of the pin. The resistance to unthreading so produced is purely frictional. The threads are commonly deformed at the factory in preference to the field, but field deformation has also been practiced.

It is also highly desirable to know just what clamping load a threaded fastener applies to a workpiece. Clamp-up load correlates to the resistance of a threaded collar to further threading onto a threaded pin. As clamp-up force increases, the resistance to further threading increases and the torque required to turn the collar increases. This fact has been used in threaded fasteners to develop a predetermined clamp-up load. In one prior art threaded fastener, a wrenching section of the collar connects to the remainder of the collar by a frangible breakneck that breaks upon the application of a predetermined torque that corresponds to the desired clamp-up load.

In the prior art threaded fastener described in FR A 2301723 a nut has two hexagonal wrenching sections disposed axially in succession, one of which is conventional. The other is smaller, having its flats recessed so as to leave projections at its corners. Upon tightening, these projections are crushed into the recesses when the desired tightening torque, and therefore clamp-up load, is reached.

The features of a thread lock and a collar with a frangible breakneck for clamp-up load control have been combined in one collar. Regrettably, the combination has its shortcomings. A thread lock by deforming threads of the collar is effected at the factory. As such, the collar does not freely thread onto the threaded pin. This makes setting somewhat difficult. Protective and lubricating coatings applied to the threads of the collar can be worn off in a collar having this type of thread lock by the considerable frictional drag between the threads of the collar and pin. The fact that a wrenching section separates from the remainder of the collar creates a spare piece of the wrenching section that must be removed from the environment where the fastener is set. This is a nuisance. Where corrosion control is important, a circular band of bare material on the collar is created by failure of the breakneck. This band is not protected by corrosion inhibitors applied to the fastener when it was manufactured. This type of fastener is also comparatively expensive because it requires considerable machining in its formation. The frangible breakneck section must be of very close dimensional tolerances if reasonable close tolerances in breakoff torques are to exist. This problem is compounded by machine tool wear in the tools that make the part and also because the breakneck section becomes elliptical-shaped after the thread locking feature has been incorporated. Alternative methods of forming the frangible breakneck, such as roll forming, are not available because the part is hollow. The frictional drag between the threaded pin and the collar in a threaded fastener employing a pre-existing deformed thread lock results in a broad range in clamp-up force because the drag varies between large limits and is an important component in the resistance that effects failure of the frangible breakneck.

A second approach to a threaded, locking fastener employs a threaded pin that has an outer annular groove placed to be outside but near to one side of the workpiece being fastened. A threaded collar is deformed radially inward into the groove so that collar material is restrained axially by radial walls of the groove. A condition of axial interference exists. In one type of such fastener the collar threads onto the pin with one setting tool. A second setting tool radially deforms the collar.

Starting from a collar having an internally threaded axial bore for use with a pin having external threads to be received by the internal threads of the collar to apply a clamp-up load on a workpiece such as is known from FR—A—2 301 723, having at least one lobe on the outside of the collar for engagement by a driver, the lobe failing radially inwardly out of engagement with the driver upon the application of a predetermined load thereon by the driver, the lobe having an external surface for engagement by the driver that extends parallel with the axis of the bore of the collar, the present invention, from one aspect, is characterised in that the body of the collar, radially inwardly of the lobe, and the lobe, are plastically deformable under the predetermined load, to displace material of the body of the collar ahead of the deforming lobe into the axial bore of the collar and into a relationship with a pin that rotationally locks the collar and the pin together.

It is when the resistance to rotation of the collar increases to a predetermined level after the collar engages the surface of a workpiece being fastened, in use of, the fastener, that the lobe yields in a radial compression and displaces collar material radially inward of the lobe into locking engagement with the pin. Thus, there is a predetermined clamp-up load, and the collar is locked on the pin in one operation.

The present invention further provides a threaded fastener for applying a clamp-up load to a workpiece comprising a collar in accordance with the present invention and including the externally threaded pin.

Preferably, the pin has means co-operating with the collar to define a void volume or void volumes to receive the protruded material.

Preferably also the void volume or each void volume is defined in part by a surface on the pin containing points that have varying radii from the longitudinal axis of the pin such that upon the material of the collar protruding into the bore of the collar and inward into the or each void volume, the rotational lock is effected by rotational interference between the collar and the pin.

Starting from a process already known from FR—A—2 301 723 for forming a joint between a workpiece and a threaded fastener comprising an internally threaded collar and an externally threaded pin, the collar having at least one lobe the outside of the collar for engagement by a driver, the lobe failing radially inwardly out of engagement with the driver upon the application of a predetermined load thereon by the driver thereby to determine the load of the fastener, the process comprising inserting the pin into a hole in the workpiece, constraining the pin with the workpiece from moving, threading the collar onto an end of the pin extending from the workpiece and engaging the workpiece with the collar to load the pin in tension and apply an axially directed clamp-up force onto the workpiece by applying to the lobe with the driver a force tangential with respect to the axis of the collar to effect the threading while at the same time applying with the driver a force radial with respect to the longitudinal axis of the collar onto the lobe, the radial force being a direct function of the tangential force, and the tangential force being a direct function of the clamp-up load being applied to the workpiece the present invention, from a further aspect, is characterised by plastically deforming the body of the collar radially inwardly of the lobe, and the lobe, to displace material of the body of the collar ahead of the deforming lobe into the axial bore of the collar to prevent further threading and to force the plastically yielded material of the body of the collar against the pin to rotationally lock the pin and the collar together, the plastic yielding being in response to the radial force.

Preferably the collar has a plurality of the lobes, and the tangential and radial forces are applied to each of the lobes by an associated side of a driver in such a manner that the tangential and radial loads on each of the lobes are substantially equal to such loads on each of the other lobes.

In one process according to the present invention the tangential and radial forces are applied to a first group of at least one of the lobes prior to the application of such forces to a second group of the remaining of the lobes.

However, the tangential and radial forces may be applied to all of the lobes together.

The plastic yielding of the lobe and collar material radially inwardly of the lobes to force such material against the pin may include the forcing of such material into void volumes between the collar and the pin to effect rotational interference between the collar and the pin.

The main advantages of the present invention are that it provides an inexpensive, self-locking, load determining fastener and fastening process, that sets easily and provides a very effective rotational lock. The fastening elements can have surface treatment that is not affected by the rotational lock or load determining functions of the fastener. The collar threads freely onto the threads of the pin until the collar engages the workpiece. Thereupon resistance builds up until the lobes fail in radial compression. Failure occurs over a few degrees of arc and therefore the amount of clamp-up load on the workpiece being fastened is determined accurately within close limits. With the failure of the lobes, the setting driver turns freely on the collar indicating that the fastener system is set. Load deformation is without throw-away pieces. Corrosion inhibitors and lubricants are not affected by this deformation. The fastener can be made inexpensively, in contrast to fasteners that require close tolerances at a breakneck.

Some ways of carrying out the invention in all of its various aspects are described below with reference to drawings which illustrate two specific embodiments of threaded fasteners in accordance with the present invention comprising two specific embodiments of internally threaded collars in accordance with the present invention used with an externally threaded pin. Thus, in the drawings:—

Figure 1 is an expanded, elevational view of one threaded fastener in accordance with the present invention and showing one collar and one pin of the present invention, with the collar being shown partly in half section and the pin being shown inserted through aligning holes in a workpiece composed of a pair of sheet-form parts,

Figure 2 is a top plan view of the collar of Figure 1,

Figure 3 is a top plan view of the end of the externally threaded pin of Figure 1,

Figure 4 shows a driver inserted over the collar of the previous Figures for threading the collar onto the threads of the pin,

Figure 5 shows the collar and the pin of the previous Figures clamping the workpiece, but before the designed clamp-up load has been reached,

Figure 6 illustrates the collar and pin of the previous Figures as lobes of the collar begin to fail under the force of the driver and collar material, radially inward of the lobes, begins to flow into void volumes defined between the pin and the collar,

Figure 7 illustrates the collar and the pin of the previous Figures in top plan view after the lobes have failed and the void volumes have been filled with collar material,

Figure 8 shows a joint effected by the fastening of the previous Figures after the lobes have been displaced into the body of the collar and collar material forced into the voids,

Figure 9 illustrates in top plan view a further form of the collar of the present invention,

Figure 10 illustrates in elevational view, partly in half section, the collar of Figure 9,

Figure 11 illustrates, in perspective view, a suitable driver for the collar of Figures 9 and 10, and

Figure 12 illustrates, vectorially, the correlation between applied torque and clamp-up load.

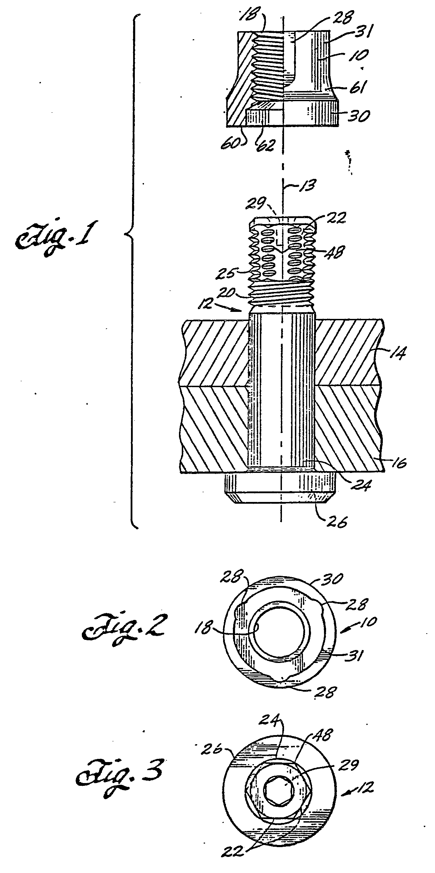

Figure 1 shows an internally threaded locking collar 10 and an externally threaded pin 12 having a head 26. The collar is threadedly engageable on the pin and the pin and the collar together form a threaded fastener. The collar and pin have a common axis 13 when threadably engaged with one another. A pair of sheet-form parts 14 and 16 receive the pin. The collar has an internally threaded bore 18. Bore 18 is circular and the threads of the collar are circularly formed and not deformed to form a thread lock. Thus, the threads of the collar project onto a plane radial to axis 13 as congruent circular rings — and not elliptical rings. The pin 12 has male threads 20 formed on a shank portion at the free end of the pin. These threads receive the threads of the locking collar. The threads of the pin are rolled over an hexagonal array of flats 22 of the pin. As will be developed, these flats, i.e. flat surfaces, define void volumes or cavities between the pin and the collar for receipt of material of the collar, to lock the collar on the pin. The pin has an unthreaded shank portion 24 received through aligned holes in the sheet-form parts 14 and 16. The head 26 of the pin bears on an exposed surface of part 16 to develop axial' clamp-up load on the sheet form parts in cooperation with the locking collar 10. Flats 22 extend an axial distance along a part of the pin shank from its free end. The threads of the pin are not fully developed on the flats, as indicated at 25. The threads of the pin below the flats and above the shank portion 24 are fully developed. The pin 12 has a wrenching recess 29 in its free end face at its threaded end.

The locking collar has a plurality of external, axially extending lobes 28. In plan view these lobes are regularly spaced apart in a circular array. Specifically, the lobes are spaced angularly from each other an equal amount. The lobes in radial planes with respect to axis 13 have convex outward, circular curvature. The radius of curvature of each lobe is the same. The lobes extend purely axially. Axial walls 31 of the collar extending between each adjacent pair of lobes are right cylindrically curved with equal radius on a centre of curvature on axis 13. In other words, the walls 31 lie in a common right cylindrical surface having a cylindrical axis coincident with the axis 13.

A base or foot 30 of the collar has a diameter. larger than the balance of the collar in order to reduce the load per unit area applied by the collar to a workpiece being fastened.

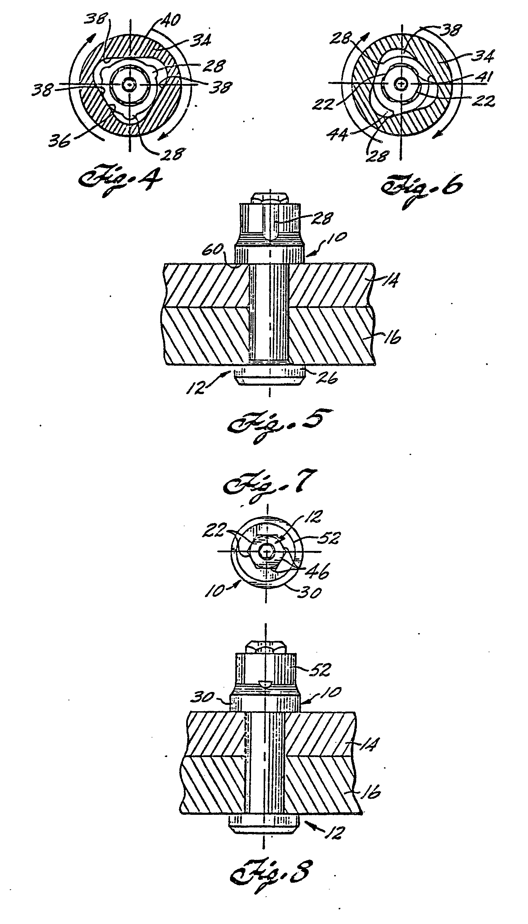

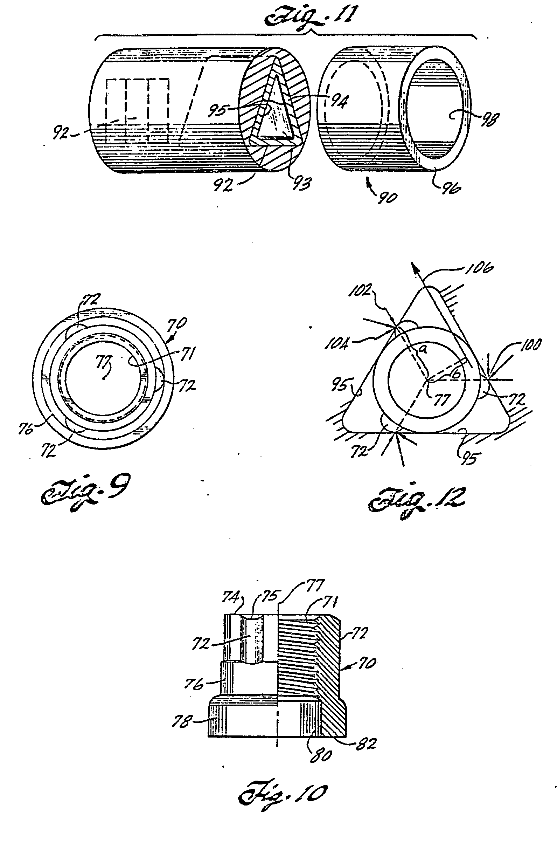

With this brief description in mind, a brief description of the operation of the fastener will aid in understanding the structural requirements of the fastener. The operation description will be given with reference to Figures 4 to 8.

In Figures 4 and 6 a driver 34 has a triangular shaped socket 36 with rounded corners and three flat sides 38. These sides approach the longitudinal centre line of the driver, which corresponds to the axis 13 of the fastener along a line of minimum radius, such as indicated at 40. On either side of these' lines the radius to the sides increases from the centre. The line of minimum radius approaches a wall of the collar between the lobes. Lobes 28 are engaged by the sides of the driver socket. The action of the driver on the lobes as the driver is rotated clockwise threads the collar down on threads 20 of the pin 12. The driver does not deform the lobes at this time because the resistance to rotation of the collar during this phase of making a joint is slight. Figure 5 shows the fastener as it appears with the collar abutting one side of the pair of parts 14, 16 and the head 26 of the pin 12 abutting the other side of the pair of parts 14, 16. With continued rotation of the driver, resistance to rotation of the collar increases. As can be seen in Figure 6, the driver socket sides engage the lobes and produce both radial and tangential components of force on the lobes, with these directions being taken with respect to the axis 13. The radial component of force begins to flatten the lobes into the body of the collar. The material thus displaced pushes materal on the inside of the collar into the void spaces defined between the flats 22 of the pin 12 and the collar. In Figure 6, the displaced material on the inside of the collar is shown by reference numeral 41 protruding into what was formerly a cylindrical bore. Geometrical considerations attending deformation will be described subsequently with reference to Figure 12.

With reference to Figures 7 and 8, after the driver completely erases the lobes, it is free to turn on the collar and an operator knows that a joint has been effected. The void volumes existing previously between the collar and the flats now are substantially completely filled with displaced collar material and the inside of the collar takes on a hexagonal configuration in conformance with the hexagonal configuration of the pin flats. This is shown by reference numeral 46 in Figure 7. A rotational lock now exists. The fastener cannot be unthreaded. Furthermore, the wrenching means on the collar has disappeared with the formation of this rotational lock. Because the lobes deform and disappear within a few degrees of rotation of the driver, corresponding to the angle subtended at the axis 13 by each lobe, axial clamp-up is never an independent function of the resistance of the collar to rotation on the pin and clamp-up can be accurately controlled and predicted. Stated differently, resistance to rotation of the collar is a function of the axial load applied by the parts 14, 16 onto the collar. This loading loads the flanks of the engaging threads of the collar and the pin. As the load on these flanks increases, so does the frictional resistance to turning of the collar with respect to the pin. Eventually, the resistance to turning of the collar with respect to the pin exceeds the yield strength of the lobes and the lobes yield and the fastener is set. As distinguished from thread locks with predeformed threads, removal of the axial load removes the frictional drag on the flanks of the threads. In this connection because rotational lock-up is not effected until displacement of collar material into the void volumes takes place, the collar can freely thread onto the threads of the pin without meaningful resistance. This means that setting is easier and any lubricant or corrosion protection coating on the threads will not be worn away by friction. Threading and lockup are all effected by a single tool.

With reference again to the first three Figures, pin flats 22 can be produced by extrusion and are of sufficient length along the axis of the fastener to accommodate desired grip variation. Grip is the thickness of the parts 14, 16 that can be fastened by the fastener. The flats and the cooperating circular axial bore of the locking collar clearly illustrate the cavities or void volumes. The radius to each edge between adjacent flats, the edge being shown in Figures 1 and 3 by reference numeral 48, is greater than the radius to any other point on each of the flats. This radius is representative of the radius to material of the locking collar. Thus, the void volumes in this embodiment can be viewed as the area outside of the chord of a circle to the arc of the circle subtended by the chord, multiplied by the length of the flats. In aggregate, the void volumes are represented by the areas outside of a hexagon and within a circumscribing circle, multiplied by the length of the flats. Obviously, there must be sufficient volume to accept all of the displaced lobe material so that each lobe will completely deform and merge into the body of the collar and leave a completely right cylindrical outside surface of the collar upon the setting of a joint. (Such a surface is shown in Figures 7 and 8 by reference numeral 52. This right circular configuration represents the curvature of the surface of the collar between the lobes before lobe failure.)

With the hexagonal form of the void volumes, registration is always assured even if the lobes each bridge an edge between adjacent flats at the line of collapse, for the lobes will then be displaced each into two adjacent volumes. The hexagonal form that meets the collar threads only along lines or edges, avoids any possibility of having material from the collar unable to flow freely into void volumes because of a failure to index. Again, it is only necessary to provide sufficient volume for the acceptance of all the displaced lobe material. For this material to act effectively as a rotational lock it should be radially within the confines of the locking collar. Any material that escapes out of the top of the collar will not be as effective as material within the collar. The void volume should be sufficient to accommodate differences in grip. At maximum grip the collar will end up further away from the manufactured head of the pin than at minimum grip. Void volume should be adequate for maximum grip.

Instead of hexagonal flats, the void volumes may be provided by splines on the surface of the pin. The interstices between the crests of the splines radially inside the collar threads provide the volumes in this case. Again, a space between the threads of the collar and a standard (i.e. ordinary) threaded pin, threadedly received in the collar may provide the volume for the displacement of lobe material giving rise to a friction type thread lock. Thus, it is not necessary to have a void volume at all in the sense of developing positive axial rotational interference between the collar and the pin.

In the illustrated embodiment, there are three lobes and six flats, and the driver has three socket sides. A greater number of collar lobes than driver socket sides results in a progressive deformation of the collar in the zone of the lobes and a lower setting torque requirement of the tool that drives the driver. It also reduces the clamp-up load on the workpiece over what such load would be when the greater number of lobes are failed simultaneously.

Instead of three flat sides, the driver socket might have just a single flat side so that there would be a progression of steps in lobe deformation.

The relationship between the driver socket sides and the lobes during the development of the lock should be one that produces radial failure of the collar in the zone of the lobes, and not shearing of the lobes from the collar. The lobes would shear from the collar with a sufficient tangential component of force. There must be some shear component on the lobes. Obviously, the required relationships exist when the loading of the collar is dominantly radially inward, and not tangential. The cross-section surface of the lobes as continuous convex curves, as shown, is not critical. The lobes could have a surface which is wedge-shaped in cross-section, for example.

The collar can be formed of a work hardenable material. This has the attraction of increasing the strength of the collar where it interferes with the pin as a joint is being made, instead of at some earlier time.

Completing the details of the description of the first embodiment, the collar has a foot 30 that presents an annular bearing surface 60 to the part 14. The surface area available for bearing is comparatively large and the unit loading on the part 14 comparatively small. The foot is right cylindrical. A transition section 61 fairs smoothly into the right cylindrical surface 31 from the foot. An axial counterbore 62 within this foot provides space for a seal, for example. It also provides a pilot for the pin threads and allows for grip variation. The collar can be made of 2024 aluminum. The collar can have a thread lubricant. Examples are cetyl alcohol, solid film lubricant, and lauric acid lubricant. The surface of the aluminum can be conditioned, as by anodizing. The collar can be heat treated.

The threaded pin can have a manufactured head of any number of standard configurations. It can also be a stud. The manufactured head need not be protruding in use of the fastener but can be of the type that recesses into a counterbore in the part 16. The non-threaded shank portion diameter need not be the same as the major thread diameter of the shank. In the illustrated embodiment, a non-circular wrenching recess 29 accepts a wrenching tool. The wrenching tool prevents rotation of the threaded pin during setting of the locking collar. Instead of the recess 29 the head 26 can have wrenching flats. The threaded pin can be made of alloy steel and its threaded part can have a lubricant coat. The part can have a protective coating also, such as cadmium plate or an aluminum coating.

With reference to Figures 9 and 10, the preferred form of the locking collar is shown by reference to numeral 70. As before, this collar has an internally threaded, right cylindrical bore 71. There is no preformed thread lock. Three axially extending lobes 72 extend from an upper end of the collar to a pilot surface 76. An axially extending, exterior surface 74 between lobes is right cylindrically curved the surfaces 74 lying in a common right cylindrical surface having its cylindrical axis co-incident with the longitudinal axis of the fastener 77. The lobes are beveled at 75 at their tops to facilitate receipt of the collar in a driver socket. Pilot surface 76 is right cylindrical and it has a diameter corresponding to a right cylindrical female surface of the driver. It will be noted that the radius of the pilot surface corresponds to the maximum radius of each of the lobes. The pilot surface and the beveled lobe tops are the structure that makes this embodiment preferred. Except for the lobes, the collar constituents are concentric on the common axis 77. The lobes are again bounded on their outside by circularly curved surfaces, as viewed in planes radial of axis 77. All the lobes have equal curvatures on their outside surfaces. The radii to corresponding points on the surfaces of all the lobes from axis 77 are the same.

As before, a foot 78 of the collar is counterbored at 80 and is a substantially right cylindrical section. A bearing surface 82 at the base of the foot is to abut the surface of a workpiece. It will be noted that the amount of lobe material that must be displaced in the Figures 9 and 10 embodiment is slightly less than in the earlier embodiment, the lobes being shorter.

Figure 11 illustrates a driver 90 suitable for driving the locking collar of Figures 9 and 10. The driver is generally cylindrical on its outside and has a standard driving socket 92, square in cross-section, for accepting a driving lug of a tool. A triangular socket 93 with flat sides and rounded corners has been preserved and thus the three lobes of the collar are deformed at the same time. In radial cross-section, the socket 93 traces an equilateral triangle with rounded corners. The socket is defined by an insert 94 that defines the bearing surfaces for bearing against the lobes. This insert can be made of a material with good wear characteristics. The insert can be made removable and replaced by a second insert for setting a locking collar having lobes of a different radius. Sides 95 of insert 94 do the actual bearing on the lobes. A nose 96 of the driver has a right cylindrical bore 98 corresponding in diameter to the diameter of pilot section 76 or foot 78. The bore fits over the pilot section.

The considerations that go into the locking collar of Figures 9 and 10 which have not been explicitly set forth here have been set forth above with reference to the embodiment of locking collar in accordance with the present

**0 001 935**

invention that was first described.

Figure 12 illustrates the relationship between the driver geometry and the lobe geometry that correlates with torsional resistance to tightening and failure of the lobes and material of the collar radially inward of the lobes. In the Figure, the illustrated collar corresponds to the collar of Figures 9 and 10. As such, each of lobes 72 has a circular curvature in radial planes. The driver is of deltoid form as illustrated in Figure 11. The closest distance from axis 77 of the collar to each of sides 95 of the driver is equal to the radius of the collar at right cylindrical surfaces 74, the surfaces angularly adjacent to the lobes. Given the constraints of the deltoid form driver that has a closest distance to the axis of the collar corresponding to the radius of the cylindrical outside surface of the collar angularly adjacent to the lobes, the circular (in radial planes) curvature of the lobes, and the radius of curvature of the lobes, an initial line of contact 100 on each lobe by each driver side 95 results. This initial line of contact is at a distance "a" from axis 77. As the driver rotates the collar, it will engage the collar along 3 lines one on each lobe, each line corresponding to a line 100. The driver will apply a force along the radius of curvature of the lobe which is not a radius from axis 77. This force can be broken into components acting radially of the axis of the fastener and tangentially thereto, as shown by vectors 102 and 104, respectively. The total tangential load on the collar is three times the tangential load on a single lobe. The load is resisted by the frictional force exerted between the threads of the collar and the threads of the pin, and the frictional force exerted between the bearing surface at the foot of the collar and the workpiece. As will be recalled, the frictional force between the threads is a direct function of the clamp-up load on the workpiece. The aggregate or total force resisting rotation of the collar is shown by a vector 106 and its acts through a distance "b". As vector 106 increases in magnitude, so must the tangential load on the lobes. The radial load on the lobes, however, bears a fixed relationship to the tangential force on the lobes, as determined by the geometry of the loading, until the lobes begin to yield. Thus, as the tangential loads increase the radial loads increase in direct proportion. Since the tangential loads are directly related to the loads resisting rotation by the requirement that the sum of the moments about axis 77 must be zero, the radial loads also are directly related to the resisting loads.

When there is yielding of the lobes, the geometry of the contact between the lobes and the driver changes. The lobes tend to flatten and the driver tends to rotate clockwise (as viewed in Figure 12) with respect to the lobes. This increase is in the radial loads, but the tangential loads stay the same. Yielding will occur primarily radially but there will be some tangential yielding. It all occurs rapidly and in only a few degrees of arc, as previously discussed.

For predictability of results the lobe geometry and driver geometry should be regular. Preferably the lobe geometry is the same for all lobes and has the same relationship to driver side geometry regardless of which side is presented to which lobe. Obviously, the material strength of the material that will yield should be the same in all zones of yielding from the start of yielding to the finish of yielding.

**Claims**

1. A collar (10, 70) having an internally threaded axial bore (18, 71) for use with a pin (12) having external threads to be received by the internal threads of the collar to apply a clamp-up load on a workpiece, the collar having at least one lobe (28, 72) on the outside of the collar (10, 70) for engagement by a driver (34, 90), the lobe failing radially inwardly out of engagement with the driver upon the application of a predetermined load thereon by the driver, the lobe having an external surface for engagement by the driver that extends parallel with the axis (13) of the bore of the collar, characterised in that the body of the collar (10, 70), radially inwardly of the lobe (28, 72), and the lobe, are plastically deformable under the predetermined load, to displace material of the body of the collar ahead of the deforming lobe into the axial bore of the collar and into a relationship with a said pin (12) that rotationally locks the collar and the pin together.

2. A collar as claimed in claim 1 wherein there is a plurality of the lobes (28, 72) each containing a predetermined and equal volume of material and the lobes and the material of the collar (10, 70) radially inwardly of the lobes are plastically deformable to uncouple the lobes from the driver (34, 90) and to develop plastically deformed material within the bore (18, 71) corresponding to the predetermined volume of the lobes.

3. A collar as claimed in claim 1 or 2 wherein the lobe or lobes (28, 72) has or have a convex curvature in planes perpendicular to the axis of the bore of the collar.

4. A collar as claimed in claims 2 and 3 wherein the lobes (28, 72) are all of the same shape and size and all equally spaced from one another.

5. A collar as claimed in any preceding claim wherein the internal threads of the collar are circular in projection on planes perpendicular to the axis (13) of the bore (18, 71) of the collar.

6. A collar as claimed in any preceding claim wherein the collar has a pilot surface (76) for receipt on a cooperating section of the driver (34, 90) to rotationally guide the driver about the axis (13) of the bore, said pilot surface being axially displaced with respect to the lobe or lobes and circular in planes perpendicular to the axis of the bore of the collar.

7. A collar as claimed in any preceding claim wherein the collar has a protective coating.

8. A collar as claimed in any preceding claim wherein the internal threads of the collar have a lubricant coating.

9. A threaded fastener for applying a clamp up load to a workpiece comprising a collar (10, 70) as claimed in any preceding claim and including the externally threaded pin (12).

10. A fastener is claimed in claim 9 wherein the pin has means (22) co-operating with the collar to define a void volume or void volumes to receive the protruded material.

11. A fastener is claimed in claim 10 wherein the void volume or each void volume is defined in part by a surface on the pin containing points that have varying radii from the longitudinal axis of the pin (12) such that upon the material of the collar protruding into the bore (18, 71) of the collar and inward into the or each void volume, the rotational lock is effected by rotational interference between the collar and the pin.

12. A process for forming a joint between a workpiece (14, 16) and a threaded fastener comprising an internally threaded collar (10, 70) and an externally threaded pin (12), the collar having at least one lobe (28, 72) on the outside of the collar for engagement by a driver (34, 90), the lobe failing radially inwardly out of engagement with the driver upon the application of a predetermined load thereon by the driver thereby to determine the load of the fastener, the process comprising inserting the pin (12) into a hole in the workpiece (14, 16), constraining the pin with the workpiece from moving, threading the collar (10, 70) onto an end of the pin extending from the workpiece and engaging the workpiece with the collar to load the pin in tension and apply an axially directed clamp-up force onto the workpiece by applying to the lobe (28, 72) with the driver a force tangential with respect to the axis of the collar to effect the threading while at the same time applying with the driver a force radial with respect to the longitudinal axis (13) of the collar onto the lobe, the radial force being a direct function of the tangential force, and the tangential force being a direct function of the clamp-up load being applied to the workpiece, characterised by plastically deforming the body of the collar (10, 70) radially inwardly of the lobe, and the lobe, to displace material of the body of the collar ahead of the deforming lobe into the axial bore (18, 71) of the collar to prevent further threading and to force the plastically yielded material of the body of the collar against the pin (12) to rotationally lock the pin and collar together, the plastic yielding being in response to the radial force.

13. A process as claimed in claim 12 wherein the collar has a plurality of the lobes (28, 72), and the tangential and radial forces are applied to each of the lobes by an associated side of a driver (34, 90) in such a manner that the tangential and radial loads on each of the lobes are substantially equal to such loads on each of the other lobes.

14. A process as claimed in claim 13 wherein the tangential and radial forces are applied to a first group of at least one of the lobes prior to the application of such forces to a second group of the remaining of the lobes.

15. A process as claimed in claim 13 or 14 wherein the plastic yielding of the lobe (28, 72) and collar material radially inwardly of the lobes to force such material against the pin (12) includes the forcing of such material into void volumes between the collar and the pin to effect the rotational interference between the collar and the pin.

16. A process as claimed in claim 15 wherein the force application step merges the lobes (28, 72) into the surface of the collar such that the lobes are substantially eliminated.

**Patentansprüche**

1. Hülse mit einer mit Innengewinde versehenen axialen Bohrung (18, 71) zur Verwendung mit einem Bolzen, der ein Außengewinde aufweist, das vom Innengewinde der Hülse zur Ausübung eines Klemmdruckes auf ein Werkstück aufzunehmen ist, wobei die Hülse zumindest einen Vorsprung (28, 72) auf der Außenseite der Hülse (10, 70) für einen Eingriff mit einem Schraubendreher (34, 90) aufweist, der Vorsprung radial nach innen aus dem Eingriff mit dem Schraubendreher bei Anwendung eines vorbestimmten Druckes auf diesen durch den Schraubendreher nachgibt und der Vorsprung für einen Eingriff mit dem Schraubendreher eine Außenfläche aufweist, die parallel zur Bohrungsachse der Hülse verläuft, dadurch gekennzeichnet, daß das Hülsengehäuse vom Vorsprung aus radial nach innen und der Vorsprung unter dem vorbestimmten Druck plastisch verformbar sind, um Material des Hülsengehäuses vor dem sich verformenden Vorsprung in die axiale Hülsenbohrung und in bezug auf einen Bolzen so zu verdrängen, daß die Hülse und der Bolzen drehfest verbunden sind.

2. Hülse nach Anspruch 1, dadurch gekennzeichnet, daß eine Mehrzahl von Vorsprüngen vorgesehen ist, von denen jeder eine vorbestimmte und gleiche Materialmenge umfaßt, und die Vorsprünge und das Material der Hülse von den Vorsprüngen aus radial nach innen verformbar sind, um die Vorsprünge vom Schraubendreher zu lösen und plastisch verformtes Material in der Bohrung zu erzeugen, das der vorbestimmten Menge der Vorsprünge entspricht.

3. Hülse nach Anspruch 1 oder 2, dadurch gekennzeichnet, daß der Vorsprung oder die Vorsprünge eine konvexe Krümmung in senkrecht zur Bohrungsachse der Hülse stehenden Ebenen aufweist bzw. aufweisen.

4. Hülse nach den Ansprüchen 2 und 3, dadurch gekennzeichnet, daß die Vorsprünge sämtlich die gleiche Form und Größe aufweisen und sämtlich in einem gleichmäßigen Abstand voneinander angeordnet sind.

5. Hülse nach einem der vorhergehenden Ansprüche, dadurch gekennzeichnet, daß das Innengewinde der Hülse in einer Projektion auf senkrecht zur Bohrungsachse der Hülse stehenden Ebenen kreisförmig ist.

6. Hülse nach einem der vorhergehenden Ansprüche, dadurch gekennzeichnet, daß die Hülse eine Führungsfläche (76) zur Aufnahme eines mit ihr zusammenwirkenden Abschnitts eines Schraubendrehers für eine Drehführung des Schraubendrehers um die Bohrungsachse aufweist und die Führungsfläche in bezug auf den Vorsprung oder die Vorsprünge mit axialem Abstand angeordnet und in senkrecht zur Bohrungsachse der Hülse stehenden Ebenen kreisförmig ausgebildet ist.

7. Hülse nach einem der vorhergehenden Ansprüche, dadurch gekennzeichnet, daß die Hülse einen Schutzüberzug besitzt.

8. Hülse nach einem der vorhergehenden Ansprüche, dadurch gekennzeichnet, daß das Innengewinde der Hülse einen Schmiermittelüberzug besitzt.

9. Verschraubungsmittel zum Aufbringen eines Klemmdruckes auf ein Werkstück, bestehend aus einer Hülse nach einem der vorhergehenden Ansprüche und einem mit Außengewinde versehenen Bolzen.

10. Verschraubungsmittel nach Anspruch 9, dadurch gekennzeichnet, daß der Bolzen Mittel (22) aufweist, die mit der Hülse zur Ausbildung eines Leeraumes oder von Leerräumen für eine Aufnahme des vorgetretenen Materials zusammenwirken.

11. Verschraubungsmittel nach Anspruch 10, dadurch gekennzeichnet, daß der Leerraum oder jeder Leerraum zum Teil von einer Oberfläche des Bolzens mit Punkten gebildet ist, die wechselnde Radien von der Längsachse des Bolzens aus aufweisen, derart, daß bei in die Hülsenbohrung und nach innen in den oder jeden Leerraum vortretendem Hülsenmaterial die drehfeste Verbindung durch wechselweisen Eingriff zwischen der Hülse und dem Bolzen gebildet ist.

12. Verfahren zum Herstellen einer Verbindung zwischen einem Werkstück und einem eine mit Innengewinde versehene Hülse (10, 70) und einen mit Außengewinde versehenen Bolzen (12) umfassenden Verschraubungsmittel, wobei die Hülse zumindest einen Vorsprung (28, 72) auf der Außenseite der Hülse für einen Eingriff mit einem Schraubendreher (34, 90) aufweist und der Vorsprung radial nach innen aus dem Eingriff mit dem Schraubendreher bei Anwendung eines vorbestimmten Druckes auf diesen durch den Schraubendreher nachgibt, um den Druck des Verschraubungsmittels zu bestimmen, wobei das Verfahren vorsieht, daß der Bolzen in ein Loch des Werkstücks (14, 16) eingesetzt, der Bolzen mit dem Werkstück gegenüber einer Bewegung festgelegt wird, die Hülse auf ein aus dem Werkstück herausragendes Ende des Bolzens aufgeschraubt und das Werkstück mit der Hülse in Eingriff gebracht wird, um den Bolzen unter Druckspannung zu setzen und eine axial gerichtete Klemmkraft auf das Werkstück auszuüben, indem mit dem Schraubendreher auf den Vorsprung eine Kraft aufgebracht wird, die tangential in bezug auf die Hülsenachse zur Durchführung des Schraubvorgangs ausgerichtet ist, während gleichzeitig mit dem Schraubendreher eine Kraft aufgebracht wird, die in bezug auf die Längsachse der Hülse radial auf den Vorsprung gerichtet ist, wobei die radiale Kraft eine direkte Funktion der tangentialen Kraft und die Tangentiale Kraft eine direkte Funktion des auf das Werkstück aufgebrachten Klemmdruckes ist, dadurch gekennzeichnet, daß das Hülsengehäuse vom Vorsprung aus radial nach innen und der Vorsprung plastisch verformt werden, damit Material des Hülsengehäuses vor dem sich verformenden Vorsprung in die axiale Bohrung der Hülse verdrängt wird, um ein weiteres Schrauben zu verhindern und das plastisch gestreckte Material des Hülsengehäuses gegen den Bolzen zu drücken und den Bolzen und die Hülse wechselseitig zusammenzuschließen, wobei die plastische Streckung in Abhängigkeit von der radialen Kraft erfolgt.

13. Verfahren nach Anspruch 12, dadurch gekennzeichnet, daß die Hülse eine Mehrzahl von Vorsprüngen aufweist und die tangentiale und die radiale Kraft auf jeden der Vorsprünge von einer zugehörigen Seite eines Schraubendrehers in der Weise aufgebracht werden, daß der tangentiale und der radiale Druck auf jedem der Vorsprünge im wesentlichen gleich diesen Drücken auf jedem der anderen Vorsprünge sind.

14. Verfahren nach Anspruch 13, dadurch gekennzeichnet, daß die tangentiale und die radiale Kraft auf eine erste Gruppe von zumindest einem der Vorsprünge vor Aufbringung dieser Kräfte auf eine zweite Gruppe der verbleibenden Vorsprünge ausgeübt werden.

15. Verfahren nach Anspruch 13 oder 14, dadurch gekennzeichnet, daß das plastische Strecken des Vorsprungs- und Hülsenmaterials von den Vorsprüngen aus radial nach innen zum Gegendrücken dieses Materials gegen den Bolzen das Eindrücken dieses Materials in Leerräume zwischen der Hülse und dem Bolzen umfaßt, um den wechselweisen Eingriff zwischen der Hülse und dem Bolzen herbeizuführen.

16. Verfahren nach Anspruch 15, dadurch gekennzeichnet, daß durch den Druckanwendungsschritt die Vorsprünge in die Oberfläche der Hülse derart eingedrückt werden, daß die Vorsprünge im wesentlichen entfernt worden sind.

## Revendications

1. Une bague ayant un alésage axial (18, 71) fileté intérieurement, destinée à être utilisée avec une tige ayant des filets extérieurs destinés à être reçus par les filets intérieurs de la bague pour appliquer une charge de serrage-bridage sur un ouvrage, la bague ayant au moins un lobe (28, 72) sur le côté extérieur de la bague (10, 70) destiné à être attaqué par un entraîneur (34, 90), le lobe cédant radialement vers l'intérieur en s'échappant de la prise avec l'entraîneur lors de l'application d'une charge prédéterminée sur ce lobe par l'entraîneur, le lobe ayant une surface extérieure destinée à être attaquée par l'entraîneur et qui s'étend parallèlement à l'axe de l'alésage de la bague, caractérisée en ce que le corps de la bague, radialement à l'intérieur par rapport au lobe, et le lobe peuvent se déformer plastiquement sous la charge prédéterminée, pour déplacer la matière du corps de la bague située en avant du lobe en cours de déformation en la refoulant dans l'alésage axial de la bague et la placer par rapport à une tige dans une relation qui bloque la bague et la tige en rotation l'une par rapport à l'autre.

2. Une bague suivant la revendication 1, dans laquelle il existe une série de lobes dont chacun contient un volume de matière prédéterminé et égal pour tous les lobes et où les lobes et la matière de la bague située radialement à l'intérieur par rapport aux lobes, peuvent se déformer plastiquement pour désaccoupler les lobes de l'entraîneur et pour développer dans l'alésage de la matière déformée plastiquement dans une quantité correspondant au volume prédéterminé des lobes.

3. Une bague suivant l'une des revendications 1 et 2, dans laquelle le lobe ou les lobes a ou ont une courbure convexe dans des plans perpendiculaires à l'axe de l'alésage de la bague.

4. Une bague suivant les revendications 2 et 3, dans laquelle les lobes sont tous de la même forme et de la même dimension et sont tous espacés régulièrement les uns des autres.

5. Une bague suivant l'une quelconque des revendications précédentes, dans laquelle les filets intérieurs de la bague sont circulaires en projection sur des plans perpendiculaires à l'axe de l'alésage de la bague.

6. Une bague suivant l'une quelconque des revendications précédentes, dans laquelle la bague a une surface pilote (76) destinée à être reçue sur une section coopérante de l'entraîneur pour guider l'entraîneur en rotation autour de l'axe de l'alésage, ladite surface pilote étant écartée axialement par rapport au lobe ou aux lobes et circulaire dans des plans perpendiculaires à l'axe de l'alésage de la bague.

7. Une bague suivant l'une quelconque des revendications précédentes, dans laquelle la bague a un revêtement protecteur.

8. Une bague suivant l'une quelconque des revendications précédentes, dans laquelle les filets intérieurs de la bague ont un revêtement lubrifiant.

9. Un dispositif de fixation fileté destiné à appliquer une charge de serrage-bridage à un ouvrage, comprenant une bague suivant l'une quelconque des revendications précédentes et comprenant la tige filetée extérieurement.

10. Un dispositif de fixation suivant la revendication 9, dans lequel la tige a des moyens (22) qui coopèrent avec la bague pour définir un volume vide ou des volumes vides prévus pour recevoir la matière refoulée.

11. Un dispositif de fixation suivant la revendication 10, dans lequel le volume vide ou chaque volume vide est défini en partie par une surface de la tige qui contient des points ont des rayons issus de l'axe longitudinal de la tige de longueur variable de manière que, lorsque la matière de la bague déborde dans l'alésage de la bague et vers l'intérieur dans le ou chaque volume vide, le blocage en rotation est réalisé par interférence en rotation entre la bague et la tige.

12. Un procédé pour former un joint entre un ouvrage et un dispositif de fixation fileté comprenant une bague (10, 70) filetée intérieurement et une tige (12) filetée extérieurement, la bague ayant au moins un lobe (28, 72) sur le côté extérieur de la bague destiné à être attaqué par un entraîneur (34, 90), le lobe cédant radialement vers l'intérieur en s'échappant de la prise avec l'entraîneur lorsqu'une charge prédéterminée lui est appliquée par l'entraîneur, pour déterminer de cette façon la charge du dispositif de fixation, procédé dans lequel on insère la tige dans ou trou de l'ouvrage (14, 16), on empêche la tige et l'ouvrage de se déplacer, on visse la bague sur une extrémité de la tige qui émerge de l'ouvrage, et on attaque l'ouvrage avec la bague pour mettre la tige en tension et appliquer à l'ouvrage une force de serrage-bridage orientée axialement, en appliquant au lobe, avec l'entraîneur, une force tangentielle par rapport à l'axe de la bague pour effectuer le vissage tout en appliquant en même temps sur le lobe avec l'entraîneur un force radiale par rapport à l'axe longitudinal de la bague, la force radiale étant fonction directe de la force tangentielle, et la force tangentielle étant fonction directe de la charge de serrage-bridage qui est appliquée à l'ouvrage, caractérisé en ce qu'on déforme plastiquement le corps de la bague radialement à l'intérieur par rapport au lobe, et le lobe, pour refouler dans l'alésage axial de la bague de la matière du corps de la bague située en avant du lobe en cours de déformation, pour empêcher la poursuite du vissage et pour forcer contre la tige la matière plastiquement déformée du corps de la bague pour bloquer la tige et la bague en rotation l'une par rapport à l'autre, la déformation plastique se produisant en réponse à la force radiale.

13. Un procédé suivant la revendication 12, dans lequel la bague a plusieurs lobes et les forces tangentielles et radiales sont appliquées à chacun des lobes par un côté associé d'un entraîneur de telle manière que les charges tangentielles et radiales exercées sur chacun des lobes soient à peu près égales aux charges de même nature exercées sur chacun des autres lobes.

14. Un procédé suivant la revendication 13, dans lequel les forces tangentielles et radiales sont appliquées à un premier groupe composé d'au moins un des lobes avant l'application de telles forces à un deuxième groupe pris dans les lobes restants.

15. Un procédé suivant l'une des revendications 13 et 14, dans lequel la déformation plastique de lobe et de la matière de la bague radialement à l'intérieur par rapport aux lobes qui sert à forcer cette matière contre la tige comprend le refoulement de cette matière dans des volumes vides situés entre la bague et la tige pour réaliser l'interférence en rotation entre la bague et la tige.

16. Un procédé suivant la revendication 15, dans lequel la phase d'application de la force fait se confondre les lobes avec la surface de la bague, de sorte que les lobes sont à peu près totalement éliminés.

0 001 935

Fig. 1

Fig. 2

Fig. 3

1

Fig.4

Fig.6

Fig.5

Fig.7

Fig.8

*Fig. 11*

92 — 95 94 98 92 93 90 96

*Fig. 9*

72 70 71 72 77 76 72

*Fig. 12*

106 102 104 100 95 a b 77 72 72 95

*Fig. 10*

74 75 77 71 72 72 76 70 78 82 80